# EUROPEAN PATENT APPLICATION

(11) **EP 2 543 637 A1**
(43) Date of publication of application: **09.01.2013**
(21) Application number: 11750229.4
(22) Date of filing: 22.02.2011
(51) Int. Cl.: C01B 39/48, C01B 37/02

(54) **ITQ-47 MATERIAL, METHOD FOR OBTAINING SAME AND USE THEREOF**

(30) Priority: 05.03.2010 ES 201030324
(71) Applicant: Consejo Superior De Investigaciones Científicas (CSIC), 28006 Madrid (ES); Universidad Politecnica De Valencia, 46022 Valencia (ES)
(72) Inventor: CORMA CANÓS, Avelino, E-46022 Valencia (ES); REY GARCÍA, Fernando, E-46022 Valencia (ES); NAVARRO VILLALBA, María Teresa, E-46022 Valencia (ES); SIMANCAS COLOMA, Raquel, E-46022 Valencia (ES); VELAMAZÁN CIRUJEDA, Noemí, E-46022 Valencia (ES); CANTIN SANZ, Ángel, E-46022 Valencia (ES); JORDÁ MORET, José Luis, E-46022 Valencia (ES)
(74) Representative: Ungria López, Javier
(86) International application number: PCT/ES2011/070110
(87) International publication number: WO 2011/107641

(57) **Abstract**

The present invention relates to a micro-porous crystalline material that is isostructural with the mineral known as boggsite and to a method for preparing same, said material having composition x X₂O₃ : z ZO₂ : y YO₂, wherein: X is a trivalent element such as Al, B, Fe, In, Ga, Cr or mixtures thereof; where (y+z)/x may have values between 9 and infinity; Z corresponds to a tetravalent element selected from Si and Ge or mixtures thereof; Y corresponds to a tetravalent element such as Ti, Sn, Zr, V or mixtures thereof; and z/y may have values between 10 and infinity.

## Description

### Field of the invention

This patent relates to a zeolitic material called ITQ-47, the structure of which is similar to the mineral called Boggsite and the preparation method thereof.

### State of the art prior to the invention

Zeolites are porous crystalline aluminosilicates which have found important applications as catalysts, adsorbents and ion exchangers. These zeolitic materials have well-defined structures that form channels and cavities inside of them with even size and shape allowing the absorption of certain molecules, while they prevent the passage of other molecules too large to diffuse through the pores to the inside of the crystal. This feature provides these materials with properties of molecular sieve. These molecular sieves may include in the network, in addition to Si, other elements of the group IIIA of the periodic system, all of them tetrahedrally-coordinated. The negative charge generated by the tetrahedrally-coordinated elements of the group IIIA in network positions is compensated by the presence in the crystal of cations, e.g. alkali or alkaline-earth cations. These cations may be totally or partially exchanged by other cations using techniques of ion exchange, being able to thus vary the properties of a given silicate by selecting the desired cations.

Many zeolites have been synthesized in the presence of an organic molecule that acts as structure director agent. Organic molecules that act as structure director agents (SDA) usually contain nitrogen in their composition, and may give rise to stable organic cations in the reaction medium.

In addition to synthetic zeolites, without natural analogue, many others are found in nature, an example of them being Mordenite, Faujasite and Chabazite among others. These zeolites are usually found in the form of low Si/Al ratio silicoaluminates and the charge of which is balanced by alkali cations. However, their usefulness is severely limited by the presence of impurities (such as Fe) and/or strong compositional variability that prevent their industrial use as catalysts. It is therefore of interest to find new materials with structures similar to natural zeolites which may be synthesized with well-defined compositions and with compositions different to those found in nature.

Boggsite is an extremely rare zeolitic mineral which so far does not have any synthetic analogue. Boggsite has been found in two different sites located one in Goble, Columbia County, Oregon (D.G. Howard et al., Amer. Miner. (1990) vol. 75, 1200-1204), and the other on Mount Adamson, Northern Victoria Land, Antarctica (E. Galli et al., Eur. J. Mineral. (1995) vol. 7, 1029-1032). Both natural zeolites have Si/X molar ratios below 4.4 (where X represents the summation of trivalent elements present in the minerals, Al and Fe), the negative charge of the zeolitic network being mostly compensated by Ca²⁺ cations, which are located in the channels of this zeolite.

### Description of the invention

The present invention describes a synthetic micro-porous crystalline material called ITQ-47 the structure of which is related to that of mineral Boggsite, having a different chemical composition of this mineral. This invention describes the preparation method of zeolite ITQ-47. Zeolite ITQ-47 has in its not calcined form a diagram of x-ray diffraction whose most important diffraction peaks are given in table 1, in table 2 for its calcined form, in table 3 for the form calcined and subjected to washing treatment and in table 4 for the ITQ-47 material subjected to post-synthesis treatment to incorporate trivalent cations in its structure.

**Table 1**

| 2θ^{a} | Relative Intensity |
|---|---|
| 7.54 | w |
| 7.99 | vs |
| 8.33 | s |
| 8.87 | w |
| 11.22 | w |
| 11.64 | w |
| 11.94 | vw |
| 13.32 | vw |
| 15.06 | vw |
| 15.25 | w |
| 15.97 | vw |
| 17.81 | vw |
| 19.76 | vw |
| 20.16 | w |
| 20.68 | w |
| 22.52 | vw |
| 23.35 | vs |
| 24.05 | vw |
| 24.52 | vw |
| 25.10 | w |
| 26.81 | w |

| | |
|---|---|
| a (±0.4) | |

**Table 2**

| 2θ^{a} | Relative Intensity |
|---|---|
| 7.53 | w |
| 7.97 | vs |
| 8.31 | m |
| 8.86 | vw |
| 11.15 | vw |
| 11.62 | vw |
| 13.29 | vw |
| 15.04 | vw |
| 15.20 | vw |
| 16.63 | vw |
| 17.75 | vw |
| 19.74 | vw |
| 20.12 | vw |
| 20.63 | vw |
| 22.46 | vw |
| 23.32 | vw |
| 23.99 | vw |
| 24.52 | vw |
| 25.02 | vw |
| 26.73 | vw |

| | |
|---|---|
| ^{a}(±0.4) | |

**Table 3**

| 2θ^{a} | Relative Intensity |
|---|---|
| 7.54 | w |
| 7.98 | vs |
| 8.31 | m |
| 8.88 | w |
| 11.21 | vw |
| 11.63 | vw |
| 13.31 | vw |
| 15.07 | vw |
| 15.22 | vw |
| 15.97 | vw |
| 16.65 | vw |
| 17.77 | vw |
| 19.76 | vw |
| 20.15 | vw |
| 20.66 | vw |
| 22.50 | vw |
| 23.36 | w |
| 24.02 | vw |
| 24.58 | vw |
| 25.05 | vw |
| 26.77 | vw |

| | |
|---|---|
| ^{a}(±0.4) | |

**Table 4**

| 2θ^{a} | Relative Intensity |
|---|---|
| 7.47 | m |
| 7.90 | vs |
| 8.24 | m |
| 8.80 | w |
| 11.26 | w |
| 13.20 | vw |
| 14.98 | w |
| 17.70 | vw |
| 19.60 | vw |
| 19.98 | vw |
| 20.51 | vw |
| 23.21 | w |
| 24.90 | vw |
| 26.56 | w |

| | |
|---|---|
| ^{a}(±0.4) | |

These X-rays diffractograms were obtained with a Panalytical X'Pert Pro diffractometer equipped with a fixed divergence slit using the K_{α} radiation of copper. The relative intensity of the lines is calculated as the percentage with respect to the most intense peak, and is considered very strong (vs) = 80-100, strong (s) =60-80, medium (m) = 40-60, weak (w) =20-40, and very weak (vw) = 0-20.

It must be taken into account that the diffraction data listed for these samples as simple or single lines, may be made up of multiple overlaps or reflections overlay which, under certain conditions, such as differences in the chemical composition, may appear as resolved or partially resolved lines. Generally, the changes in the chemical composition may cause variations in the parameters of the unit cell and/or the symmetry of the crystal, without producing a change in the structure. These changes, which also include changes in relative intensities, may also be due to differences in the type and amount of compensation cations, network composition, crystal size and shape of the same, preferential orientation or to the type of heat or hydrothermal treatment suffered.

The present invention relates to a micro-porous crystalline material called ITQ-47, isostructural with the mineral Boggsite, which may have a chemical composition:

x X₂O₃: y YO₂ : z ZO₂

where:
- X is a trivalent element selected from Al, B, Fe, In, Ga, Cr, or mixtures thereof;
- Y is a tetravalent element selected from Ti, Sn, Zr, V or mixtures thereof, preferably from Ti, Sn, Zr, or mixtures thereof;
- Z is a tetravalent element selected from Si, Ge or mixtures thereof, preferably Si;
- the value of (y+z)/x is comprised between 9 and infinity, preferably between 20 and infinity;
- the value of z/y is comprised between 10 and infinity, preferably from 15 and infinity.

From the given values clearly follows that the crystalline material ITQ-47 may be synthesized in the absence of added trivalent elements. The X-rays diffractogram of zeolite in its calcined and washed form has the diffraction peaks listed in Table 3.

According to a particular embodiment of the present invention, the value of x may be equal to zero such that it may have a chemical composition:

y YO₂: z ZO₂

According to another particular embodiment, the value of y is equal to zero such that it may have a chemical composition:

x X₂O₃: z ZO₂

where:
- the value of z/x is comprised between 9 and infinity, and more preferably between 20 and infinity.

According to a preferred embodiment, the material of the present invention, ITQ-47, has a chemical composition:

t P₂O₅: x X₂O₃: y YO₂: z ZO₂

where:
- X is a trivalent element selected from Al, B, Fe, In, Ga, Cr, or mixtures thereof;
- Y is a tetravalent element selected from Ti, Sn, Zr, V or mixtures thereof, preferably from Ti, Sn, Zr, or mixtures thereof;
- Z is a tetravalent element selected from Si, Ge or mixtures thereof, preferably Si;
- the value of (y+z)/x is comprised between 9 and infinity, preferably between 20 and infinity;
- the value of z/y is comprised between 10 and infinity, preferably between 15 and infinity.
- the value of t/(x+y+z) may be comprised between 1 and 0.

From the given values clearly follows that the crystalline material ITQ-47 may be synthesized in the absence of added trivalent elements, "t" may be comprised between n and 0 depending on the nature of the structure director agent. The X-rays diffractogram of zeolite in its calcined form has the diffraction peaks listed in Table 2.

According to a particular embodiment, x may be 0 and the ITQ-47 material may have a chemical composition:

t P₂O₅: y YO₂: z ZO₂

where:
- t/(y+z) may be comprised between 1 and 0.

According to another particular embodiment, y may be 0 and the ITQ-47 material may have a chemical composition:

t P₂O₅: X X₂O₃: Z ZO₂

where:
- the value of z/x is comprised between 9 and infinity, preferably between 20 and infinity;
- t/(x+z) may be comprised between 1 and 0.

The calcined crystalline material ITQ-47 may be subjected to one or several processes of chemical extraction or washing in aqueous, alcoholic or organic medium, or a mixture thereof to eliminate the P₂O₅ inorganic waste from the removal of the structure director agent. This extraction or washing treatment may be carried out in acid, neutral or alkaline medium.

According to another preferred embodiment, the material of the present invention, ITQ-47, has a chemical composition:

n R : x X₂O₃: z ZO₂ : y YO₂

where:
- X is a trivalent element selected from Al, B, Fe, In, Ga, Cr, or mixtures thereof;
- Y is a tetravalent element selected from Ti, Sn, Zr, V or mixtures thereof, preferably from Ti, Sn, Zr, or mixtures thereof;
- Z is a tetravalent element selected from Si, Ge or mixtures thereof, preferably Si;
- the value of (y+z)/x is comprised between 9 and infinity, preferably between 20 and infinity;
- the value of z/y is comprised between 10 and infinity, preferably between 15 and infinity;
- R is a structure director agent, preferably said R contains P, more preferably R contains P-N bonds, and more preferably is selected from tert-Butyl-imino-tris(dimethylamino)-phosphorane and its protonated derivative;
- the value of n/(x+y+z) is comprised between 1 and 0.001.

From the given values clearly follows that the crystalline material ITQ-47 may be synthesized in the absence of added trivalent elements. The n/z ratio may be comprised between 1 and 0.001 in the ITQ-47 material as it is synthesized. The X-rays diffractogram of the zeolite in its synthesized form has the diffraction peaks listed in Table 1.

According to a particular embodiment, x may be 0 and the ITQ-47 material may have a chemical composition:

n R : y YO₂ : z ZO₂

where:
- the value of n/(y+z) is comprised between 1 and 0.001.

According to another particular embodiment, y may be 0 and the ITQ-47 material may have a chemical composition

n R: x X₂O₃: z ZO₂

where:
- the value of z/x is comprised between 9 and infinity, preferably between 20 and infinity;
- the value of n/(x+z) is comprised between 1 and 0.001.

The crystalline material ITQ-47 calcined and/or calcined and washed may be subjected to one or several post-synthesis processes of incorporation or exchange of trivalent elements using solutions that contain trivalent elements X that may be selected from Al, Ga, B, Cr, Fe, In and mixtures thereof in aqueous, alcoholic or organic medium or a mixture thereof. In this process the P₂O₅ inorganic waste from the removal of the structure director agent may be removed and/or the trivalent elements of the solutions incorporated. This treatment of incorporation of trivalent metals and/or washing may be carried out in acidic, neutral or alkaline medium. The crystalline material with trivalent metals incorporated by post-synthesis treatments has a molar composition in its anhydrous state which is determined by the equation:

x X₂O₃ : y YO₂: z ZO₂

wherein X is a trivalent element such as Al, B, Fe, In, Ga, Cr or mixtures thereof, Y is a tetravalent element such as Ti, Sn, Zr, V or mixtures thereof, and Z corresponds to an element selected from Si or Ge, or mixtures thereof. The value of (y+z)/x is at least 9, and may be comprised between 20 and ∞ and the value of z/y is of at least 10. From the given values clearly follows that the crystalline material ITQ-47 may be synthesized in the absence of added trivalent elements. The X-rays diffractogram of the zeolite after the post-synthesis treatment to incorporate trivalent elements in its structure has the diffraction peaks listed in Table 4.

The structure of the zeolite ITQ-47 may be described by its unit cell, which is the smallest structural unit that contains all the structural elements of this material. According to a particular embodiment, the ITQ-47 material may have atoms in tetrahedral coordination linked through bridge oxygen atoms that connect contiguous atoms in tetrahedral coordination, containing 96 atoms in tetrahedral coordination in its cell unit, called T1, T3, T4 up to T96, other than oxygen, which are located in the crystallographic positions with Cartesian atomic coordinates a, b and c that are shown in Table 5.

**Table 5**

| Atomic coordinates | *a* (Å) | *b* (Å) | *c* (Å) |
|---|---|---|---|
| T1 | 3.75 | 4.50 | 8.48 |
| T2 | 13.78 | 16.31 | 2.16 |
| T3 | 16.30 | 7.30 | 8.49 |
| T4 | 6.27 | 19.11 | 2.16 |
| T5 | 3.75 | 19.11 | 4.17 |
| T6 | 13.78 | 7.30 | 10.49 |
| T7 | 16.30 | 16.31 | 4.17 |
| T8 | 6.27 | 4.50 | 10.49 |
| T9 | 16.30 | 19.11 | 4.17 |
| T10 | 6.27 | 7.30 | 10.49 |
| T11 | 3.75 | 16.31 | 4.17 |
| T12 | 13.78 | 4.50 | 10.49 |
| T13 | 16.30 | 4.50 | 8.49 |
| T14 | 6.27 | 16.31 | 2.16 |
| T15 | 3.75 | 7.30 | 8.49 |
| T16 | 13.78 | 19.11 | 2.16 |
| T17 | 1.48 | 4.52 | 10.50 |
| T18 | 11.51 | 16.32 | 4.17 |
| T19 | 18.57 | 7.29 | 10.50 |
| T20 | 8.54 | 19.09 | 4.17 |
| T21 | 1.48 | 19.09 | 2.15 |
| T22 | 11.51 | 7.29 | 8.48 |
| T23 | 18.57 | 16.32 | 2.15 |
| T24 | 8.54 | 4.52 | 8.48 |
| T25 | 18.57 | 19.09 | 2.15 |
| T26 | 8.54 | 7.29 | 8.48 |
| T27 | 1.48 | 16.32 | 2.15 |
| T28 | 11.51 | 4.52 | 8.48 |
| T29 | 18.57 | 4.52 | 10.50 |
| T30 | 8.54 | 16.32 | 4.17 |
| T31 | 1.48 | 7.29 | 10.50 |
| T32 | 11.51 | 19.09 | 4.17 |
| T33 | 3.80 | 0.58 | 4.26 |
| T34 | 13.83 | 12.39 | 10.58 |
| T35 | 16.25 | 11.22 | 4.26 |
| T36 | 6.23 | 23.03 | 10.58 |
| T37 | 3.80 | 23.03 | 8.40 |
| T38 | 13.83 | 11.22 | 2.07 |
| T39 | 16.25 | 12.39 | 8.40 |
| T40 | 6.23 | 0.58 | 2.07 |
| T41 | 16.25 | 23.03 | 8.40 |
| T42 | 6.23 | 11.22 | 2.07 |
| T43 | 3.80 | 12.39 | 8.40 |
| T44 | 13.83 | 0.58 | 2.07 |
| T45 | 16.25 | 0.58 | 4.26 |
| T46 | 6.23 | 12.39 | 10.58 |
| T47 | 3.80 | 11.22 | 4.26 |
| T48 | 13.83 | 23.03 | 10.58 |
| T49 | 1.63 | 0.60 | 2.00 |
| T50 | 11.66 | 12.40 | 8.32 |
| T51 | 18.42 | 11.21 | 2.00 |
| T52 | 8.39 | 23.01 | 8.32 |
| T53 | 1.63 | 23.01 | 10.66 |
| T54 | 11.66 | 11.20 | 4.33 |
| T55 | 18.42 | 12.40 | 10.66 |
| T56 | 8.39 | 0.60 | 4.33 |
| T57 | 18.42 | 23.01 | 10.66 |
| T58 | 8.39 | 11.21 | 4.33 |
| T59 | 1.63 | 12.40 | 10.66 |
| T60 | 11.66 | 0.60 | 4.33 |
| T61 | 18.42 | 0.60 | 2.00 |
| T62 | 8.39 | 12.40 | 8.32 |
| T63 | 1.63 | 11.21 | 2.00 |
| T64 | 11.66 | 23.01 | 8.32 |
| T65 | 4.54 | 2.01 | 6.90 |
| T66 | 14.57 | 13.81 | 0.57 |
| T67 | 15.51 | 9.80 | 6.90 |
| T68 | 5.49 | 21.60 | 0.57 |
| T69 | 4.54 | 21.60 | 5.76 |
| T70 | 14.57 | 9.80 | 12.08 |
| T71 | 15.51 | 13.81 | 5.76 |
| T72 | 5.49 | 2.01 | 12.08 |
| T73 | 15.51 | 21.60 | 5.76 |
| T74 | 5.49 | 9.80 | 12.08 |
| T75 | 4.54 | 13.81 | 5.76 |
| T76 | 14.57 | 2.01 | 12.08 |
| T77 | 15.51 | 2.01 | 6.90 |
| T78 | 5.49 | 13.81 | 0.57 |
| T79 | 4.54 | 9.80 | 6.90 |
| T80 | 14.57 | 21.60 | 0.57 |
| T81 | 2.39 | 2.03 | 12.05 |
| T82 | 12.41 | 13.84 | 5.73 |
| T83 | 17.67 | 9.77 | 12.05 |
| T84 | 7.64 | 21.58 | 5.73 |
| T85 | 2.39 | 21.58 | 0.60 |
| T86 | 12.41 | 9.77 | 6.93 |
| T87 | 17.67 | 13.84 | 0.60 |
| T88 | 7.64 | 2.03 | 6.93 |
| T89 | 17.67 | 21.58 | 0.60 |
| T90 | 7.64 | 9.77 | 6.93 |
| T91 | 2.39 | 13.84 | 0.60 |
| T92 | 12.41 | 2.03 | 6.93 |
| T93 | 17.67 | 2.03 | 12.05 |
| T94 | 7.64 | 13.84 | 5.73 |
| T95 | 2.39 | 9.77 | 12.05 |
| T96 | 12.41 | 21.58 | 5.73 |

Each of the T atoms of Table 5 is surrounded by four atoms of oxygen as first neighbours and other four T atoms as second neighbours, such that the T atoms are connected two to two through bridges oxygen forming T-O-T bonds. The presence of cations or depending on the nature of the T atoms may modify the values reported in Table 5, so each crystallographic coordinate may be modified up to 0.5 A of the value given in Table 5.

The structure of the material called ITQ-47 has a micro-porous network formed by channels with openings formed by 10 and 12 TO₄ tetrahedra that cross each other.

The organic component present in the ITQ-47 material may be removed as is synthesized, for example by extraction and/or by heat treatment heating at a temperature above 200 °C for a period of time that may be comprised between 2 minutes and 25 hours.

The compensation cations in the material in its not calcined form or after thermal treatment, may be exchanged, in the case of being present, by other cations such as metal ions, H⁺ and precursors of H⁺ such as for example NH⁺₄. Among the cations that may be introduced by ion exchange those that may play a positive role in the activity of the material as a catalyst are preferred, and more specifically are preferred cations such as H⁺, cations of rare earths and metals of the group VIII, as well as of the group IIA, IIIA, IVA, VA, IB, IIB, IIIB, IVB, VB, VIIB of the periodic table of the elements.

Likewise, it is possible to introduce cations in the network of the zeolite ITQ-47 through post-synthesis treatments. These treatments consist of suspending the calcined or calcined and washed ITQ-47 sample in an aqueous, alcoholic or organic solution or mixtures of both containing the trivalent element that you want to incorporate at a temperature between 0 and 200° C for periods comprised between 1 hour and 15 days.

With the purpose of preparing catalysts, the crystalline material of the present invention may be intimately combined with hydrogenating-dehydrogenating components such as platinum, palladium, nickel, rhenium, cobalt, tungsten, molybdenum, vanadium, chromium, manganese, iron, and combinations of the same. The introduction of these elements may be carried out in the stage of crystallization, by exchange (if appropriate), and/or impregnation or by physical mixture. These elements may be introduced in their cationic form and/or from salts or other compounds resulting in the metal component or oxide in its proper catalytic form by decomposition.

In addition, the present invention relates to the method for obtaining the ITQ-47 material described above.

According to the present invention, the method for the preparation of the ITQ-47 material may comprise at least one first step of preparation of a mixture that contains H₂O, an oxide or other source of the tetravalent material Z and a structure director agent (R), a source of the trivalent element X, an oxide or other source of the tetravalent material Y, where the synthesis mixture has a molar composition of oxides in the following ranges:

| | |
|---|---|
| (YO₂+ZO₂)/X₂O₃ | higher than 2, preferably higher than 5; |
| H₂O/(YO₂+ZO₂) | 1 -50, preferably 2-30; |
| R/(YO₂ + ZO₂) | 0.05-3.0, preferably from 0.05-1; |
| OH-/(YO₂ + ZO₂) | 0.05-3.0, preferably from 0.05-1; |
| ZO₂/YO₂ | higher than 5, preferably from 8-25; |
| SiO₂/GeO₂ | higher than 2, preferably higher than 5. |

A second step in which the mixture may be maintained at a temperature between 80 and 200° C until the crystals of the material are formed and a subsequent step of recovery of the crystalline material.

According to a preferred embodiment of the present invention, Z is Si.

According to another preferred embodiment, the structure director agent R may be a compound that contains P, preferably R contains P-N bonds, and more preferably is selected from tert-Butyl-imino-tris(dimethylamino)-phosphorane and its protonated cationic derivative.

The method of preparation of this material may be carried out in basic medium and in the absence of added fluoride ions.

This material may be prepared according to a particular embodiment, from a reaction mixture containing H₂O, optionally an oxide or a source of the trivalent element X, such as for example Al and/or B, an oxide or a source of the tetravalent element or elements Y, such as for example Si, a source of Ge, such as for example GeO₂ and an organic structure director agent (R) usually an organic cation, which may contain atoms other than C, H and N in its composition. Compounds of the phosphazene base type characterized by the presence of P-N bonds in their structure may be used as structure director agents, more preferably the compound tert-Butyl-imino-tris(dimethylamino)-phosphorane or its protonated cationic derivative.

The composition of the reaction mixture has the following composition in terms of molar ratios of oxides:

| Reagents | Useful | Preferred |
|---|---|---|
| (YO₂+ZO₂)/X₂O₃ | higher than 2 | higher than 5 |
| H₂O/(YO₂⁺ZO₂) | 1-50 | 2-30 |
| R/(YO₂+ZO₂) | 0.05-3.0 | 0.05-1.0 |
| OH-/(YO₂+ZO₂) | 0.05-3.0 | 0.05-1.0 |
| ZO₂/YO₂ | higher than 5 | 8-25 |
| SiO₂/GeO₂ | higher than 2 | higher than 5 |

The crystallization of the material may be carried out in agitation, in autoclaves at temperature comprised between 80 and 200° C, for sufficient time to achieve the crystallisation, e.g. between 12 hours and 30 days.

At the end of the stage of crystallization the crystals are separated from the material of the mother liquor, and are recovered. It must be taken into account that the components of the synthesis mixture may come from different sources, and depending on these the times and crystallization conditions may vary. Crystals of the same material or of this material calcined, in amounts of up to 15% by weight with respect to the total of oxides, may be added as seeds to the synthesis mixture with the purpose of facilitating the synthesis. These may be added before or during the crystallization.

According to a particular embodiment, the method of preparation of the ITQ-47 material may comprise a step of calcination of the crystalline material obtained, which calcination may be carried out under vacuum, under air, nitrogen, hydrogen, argon, helium or any other gas and at a temperature higher than 200° C and lower than 1200° C, preferably between 200 and 1000° C during a time that may be between 2 minutes and 25 hours. The ITQ-47 material after the calcination has a system of pores free of organic matter, the X-rays diffractogram of which has the peaks that are listed in Table 2. During this calcination inorganic waste from the structure director agent may remain in the interior of the channels or on the surface of the material. These wastes may be removed by a subsequent washing treatment with water, any alcohol with less than six carbons or mixtures thereof, as well as by aqueous or alcoholic solutions of inorganic salts.

According to a particular embodiment, said washing process or processes may comprise at least the following stage:
a) suspension of the material in a solution of a compound selected from an acid, a base, an ammonium salt, a sodium salt, a salt of any alkali metal, a salt of any alkaline-earth metal or mixtures thereof. In a preferred way y said solution is an aqueous, alcoholic or organic solution or mixture thereof.

The washing process is carried out at a temperature preferably comprised between 0° C and 200° C. The resulting diffraction diagram of the material shows the diffraction peaks that are listed in Table 3.

In addition, the calcined ITQ-47 material or the calcined and washed ITQ-47 material may be subjected to one or more post-synthesis treatments. Said treatments may consist of preferably treating the ITQ-47 with aqueous, alcoholic or organic solutions, or mixtures of them containing the trivalent elements X, selected preferably from Al, Ga, B, Cr, Fe, In, and mixtures thereof with the purpose of incorporating them into the zeolitic network. This post-synthesis treatment may be carried out at neutral, acidic or alkaline pHs at temperatures preferably comprised between 0 and 200° C for a preferred time between 1 hour and 15 days. The resulting material has the diffraction peaks shown in Table 4 and contains elements that come from the treatment solution incorporated into the network.

Subsequently, it may be recovered from the solid washed by filtration, centrifugation or any technique for separating solids from liquids and may be subsequently activated through calcination at temperatures above 200° C.

The present invention relates, moreover, to the use of the ITQ-47 material obtained according to the method described above, as a component of catalysts for catalytic cracking of hydrocarbons, catalytic hydro-cracking of hydrocarbons, processes of alkylation of aromatics with alcohols or olefins and processes of esterification, acylation, reaction of aniline with formaldehyde in its acid form and/or exchange with appropriate cations, as well as to convert feeds formed by organic compounds into higher added value products. The produced ITQ-47 material may be pelleted in accordance with known techniques.

### Brief description of the figure

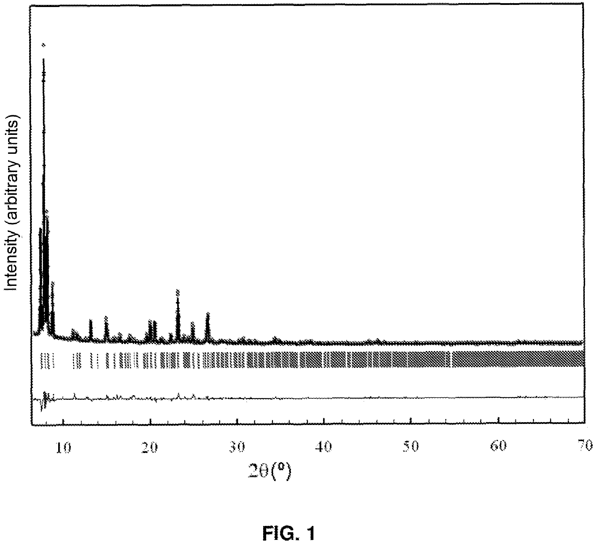

**FIG. 1****.-** It shows the adjustment between the experimental and the simulated diagram of the material of example 10.

### Examples

### Example 1- Preparation of tert-Butyl-imino-tris(dimethylamino)-phosphorane.

13.8 g of PCl₅ are dissolved in 100 ml of anhydrous CH₂Cl₂ under nitrogen atmosphere. A mixture composed by 11.7 g of 2 M solution of dimethylamine in tetrahydrofuran at - 50° C and 26.3 g of triethylamine is added slowly to the above solution. The mixture is stirred vigorously at low temperature for 1 hour and the reaction is allowed to end at room temperature for 12 hours.

33.0 g of tert-butylamine at - 50° C are added on this mixture. The resulting mixture is filtered and the solvent is removed from the filtrate under vacuum.

The resulting solid product is dissolved in water and is precipitated as tetrafluoroborate salt when adding an excess of sodium tetrafluoroborate. The resulting crystals are recovered using filtration, and are recrystallized in ethyl acetate.

The obtained crystals are transformed into the desired tert-Butyl-imino-tris(dimethylamino)-phosphorane by treatment with methanolic potassium hydroxide, separating the undesired solid residue from the supernatant. The resulting solution is taken to dryness by means of evacuation under high vacuum, and the solid is treated with 0.5 g of barium oxide, distilling the tert-Butyl-imino-tris(dimethylamino)-phosphorane under high vacuum.

### Example 2- Preparation of the zeolite ITQ-47

9.135 g (0.508 mol) of H₂O are added to 7.068 g (0.030 mol) of tert-Butyl-imino-tris(dimethylamino)-phosphorane prepared as described in example 1, maintaining the mixture under stirring for fifteen minutes. 13.048 g (0.063 mol) of tetraethylorthosilicate, 1.312 g (0.0125 mol) of GeO₂ and 0.177 g (0.0028 mol) of H₃BO₃ are added to this mixture. The mixture is maintained under stirring at room temperature until the total evaporation of the ethanol formed during the hydrolysis of the tetraethylorthosilicate. Subsequently 6.919 g (0.384 mol) of H₂O are added until reaching the H₂O/Si₊Ge ratio of 10.

The obtained gel is transferred to steel autoclaves coated with Teflon and entered into a oven at 150° C for 26 days.

After the synthesis time has elapsed, the solid obtained is washed with 100 ml of an aqueous solution of tert-Butyl-imino-tris(dimethylamino)-phosphorane pH = 11.5. It is then washed with 2000 ml of distilled water and dried at 100° C for 10 hours.

The resulting solid has an X-rays diffraction diagram that contains all the peaks listed in Table 6.

**Table 6**

| 2θ | Relative intensity |
|---|---|
| 7.540 | 20 |
| 7.991 | 100 |
| 8.327 | 75 |
| 8.870 | 21 |
| 11.225 | 25 |
| 11.643 | 25 |
| 11.938 | 17 |
| 13.316 | 5 |
| 15.060 | 17 |
| 15.252 | 28 |
| 15.984 | 10 |
| 17.805 | 5 |
| 19.775 | 18 |
| 20.161 | 37 |
| 20.682 | 38 |
| 22.513 | 6 |
| 23.355 | 95 |
| 24.059 | 10 |
| 24.522 | 8 |
| 25.103 | 34 |
| 26.797 | 25 |

### Example 3- Preparation of the zeolite ITQ-47 in its calcined form.

A solid prepared as described in example 2 is introduced in a muffle furnace and calcined under air at 700° C for 5 hours to decompose the organic matter retained inside.

The resulting solid has an X-rays diffraction diagram that contains all the peaks listed in Table 7.

**Table 7**

| 2θ | Relative intensity |
|---|---|
| 7.526 | 35 |
| 7.978 | 100 |
| 8.320 | 46 |
| 8.880 | 19 |
| 11.224 | 2 |
| 11.633 | 2 |
| 11.929 | 1 |
| 13.306 | 6 |
| 15.072 | 8 |
| 15.233 | 3 |
| 16.688 | 2 |
| 17.797 | 2 |
| 19.770 | 3 |
| 20.129 | 7 |
| 20.643 | 8 |
| 22.503 | 2 |
| 23.376 | 17 |
| 24.016 | 2 |
| 24.612 | 1 |
| 25.063 | 6 |
| 26.729 | 10 |

### Example 4- Washing of a calcined zeolite ITQ-47.

0.25 g of the solid prepared as described in example 3 are treated with 16 ml of a solution of 3 M ammonium acetate at 75° C for 1 hour, and 3 hours at 90° C. The solid is recovered by filtration and washed thoroughly with boiling water. The solid is dried at 100°C for 10 hours.

The resulting solid has an X-rays diffraction diagram that contains all the peaks listed in Table 8.

**Table 8**

| 2θ^{a} | Relative intensity |
|---|---|
| 7.535 | 28 |
| 7.977 | 100 |
| 8.314 | 47 |
| 8.875 | 20 |
| 11.217 | 4 |
| 11.637 | 3 |
| 13.314 | 6 |
| 15.066 | 10 |
| 15.231 | 4 |
| 15.963 | 2 |
| 16.621 | 2 |
| 17.776 | 2 |
| 19.763 | 4 |
| 20.146 | 8 |
| 20.665 | 9 |
| 22.498 | 3 |
| 23.357 | 24 |
| 24.015 | 3 |
| 24.591 | 2 |
| 25.052 | 11 |
| 26.771 | 13 |

### Example 5- Post-synthesis treatment of a calcined zeolite ITQ-47 to obtain AI-ITQ-47.

0.42 g of the solid prepared as described in example 3 are added to 30 ml of a 8% aluminium nitrate solution. The mixture is transferred to steel autoclaves coated with Teflon and entered into an oven at 140°C for 3 days. It is then washed with 2000 ml of distilled water and dried at 100° C for 10 hours.

The resulting solid has an X-rays diffraction diagram that contains all the peaks listed in Table 9.

**Table 9**

| 2θ^{a} | Relative intensity |
|---|---|
| 7.466 | 31 |
| 7.902 | 100 |
| 8.242 | 48 |
| 8.803 | 29 |
| 11.262 | 27 |
| 13.198 | 7 |
| 14.981 | 28 |
| 17.727 | 12 |
| 19.604 | 15 |
| 19.978 | 16 |
| 20.511 | 12 |
| 23.208 | 37 |
| 24.904 | 14 |
| 26.561 | 24 |

### Example 6- Post-synthesis treatment of a calcined zeolite ITQ-47 to obtain ITQ-47 without trivalent elements in its composition.

0.42 g of the solid prepared as described in example 3 are added to 30 ml of a 2N nitric acid nitrate solution. The mixture is transferred to steel autoclaves coated with Teflon and entered into an oven at 140°C for 3 days. It is then washed with 2000 ml of distilled water and dried at 100° C for 10 hours.

The resulting solid has an X-rays diffraction diagram characteristic of the zeol ite ITQ-47.

### Example 7- Preparation of the zeolite ITQ-47

4.281 g (0.238 mol) of H₂O are added to 2.554 g (0.011 mol) of tert-Butyl-imino-tris(dimethylamino)-phosphorane prepared as described in example 1, maintaining the mixture under stirring for fifteen minutes. 6.378 g (0.031 mol) of tetraethylorthosilicate, 0.316 g (0.003 mol) of GeO₂ and 0.079 g (0.0013 mol) of H₃BO₃ are added to this mixture. The mixture is maintained under stirring at room temperature until the total evaporation of the ethanol formed during the hydrolysis of the tetraethylorthosilicate. Subsequently 2.792 g (0.155 mol) of H₂O are added until reaching the H₂O/Si₊Ge ratio of 10.

The obtained gel is transferred to steel autoclaves coated with Teflon and entered into a oven at 150° C for 26 days.

After the synthesis time has elapsed, the solid obtained is washed with 100 ml of an aqueous solution of tert-Butyl-imino-tris(dimethylamino)-phosphorane pH = 11.5. It is then washed with 2000 ml of distilled water and dried at 100° C for 10 hours.

The resulting solid has an X-rays diffraction diagram characteristic of the zeol ite ITQ-47.

### Example 8- Preparation of the zeolite ITQ-47

3.971 g (0.221 mol) of H₂O are added to 2.578 g (0.011 mol) of tert-Butyl-imino-tris(dimethylamino)-phosphorane prepared as described in example 1, maintaining the mixture under stirring for fifteen minutes. 5.217 g (0.025 mol) of tetraethylorthosilicate are added to this mixture. The mixture is maintained under stirring at room temperature until the total evaporation of the ethanol formed during the hydrolysis of the tetraethylorthosilicate. Subsequently 1.068 g (0.059 mol) de H₂O are added until reaching the H₂O/Si ratio of 10.

The obtained gel is transferred to steel autoclaves coated with Teflon and entered into a oven at 150° C for 26 days.

After the synthesis time has elapsed, the solid obtained is washed with 100 ml of an aqueous solution of tert-Butyl-imino-tris(dimethylamino)-phosphorane pH = 11.5. It is then washed with 2000 ml of distilled water and dried at 100° C for 10 hours.

The resulting solid has an X-rays diffraction diagram that has diffraction lines characteristic of the zeolite ITQ-47.

### Example 9- Preparation of the zeolite ITQ-47

3.823 g (0.212 mol) of H₂O are added to 2.373 g (0.010 mol) of tert-Butyl-imino-tris(dimethylamino)-phosphorane prepared as described in example 1, maintaining the mixture under stirring for fifteen minutes. 4.897 g (0.0235 mol) of tetraethylorthosilicate, 0.167 g (0.0016 mol) of GeO₂ and 0.061 g (0.001 mol) of H₃BO₃ are added to this mixture. The mixture is maintained under stirring at room temperature until the total evaporation of the ethanol formed during the hydrolysis of the tetraethylorthosilicate. Subsequently 0.070 mg of zeolite ITQ-47 seed dispersed in 1.516 g (0.084 mol) of H₂O is added until reaching the H₂O/Si₊Ge ratio of 10.

The obtained gel is transferred to steel autoclaves coated with Teflon and entered into a oven at 150° C for 26 days.

After the synthesis time has elapsed, the solid obtained is washed with 100 ml of an aqueous solution of tert-Butyl-imino-tris(dimethylamino)-phosphorane pH = 11.5. It is then washed with 2000 ml of distilled water and dried at 100° C for 10 hours.

The resulting solid has an X-rays diffraction diagram characteristic of the zeol ite ITQ-47.

### Example 10- Refining of the structure of ITQ-47 according to the Rietveld method.

The structure of the zeolite ITQ-47 may be successfully refined using the Rietveld method applied to an X-ray diffraction diagram obtained from a sample prepared as described in example 3. The fit between the experimental and the simulated diagram is shown in Figure 1. The spatial group, the refining parameters and the atomic positions of the zeolite ITQ-47 are shown in Table 5.

**Table 5**

| | | | |
|---|---|---|---|
| Spatial group: | | | |
| I m m a | | | |
| Parameters of unit cell: | | | |
| a= 20.0534(10) angstroms | | | |
| b= 23.6102(14) angstroms | | | |
| c= 12.6528(9) angstroms | | | |
| alpha=beta=gamma=90° | | | |
| Atomic positions: | | | |
| Si1 | 0.1872(4) | 0.1906(3) | 0.6708(5) |
| Si2 | 0.0740(3) | 0.1914(3) | 0.8298(5) |
| Si3 | 0.1895(4) | 0.0246(3) | 0.3364(5) |
| Si4 | 0.0815(4) | 0.0254(3) | 0.1578(5) |
| Si5 | 0.2263(3) | 0.0850(2) | 0.5451(5) |
| Si6 | 0.1191(3) | 0.0862(2) | 0.9525(5) |
| O1 | 0.1948(19) | 0.1459(8) | 0.5782(13) |
| O2 | 0.1204(11) | 0.1711(11) | 0.7321(19) |
| O3 | 0.188(3) | 0.2500 | 0.6121 (15) |
| O4 | 0.2500 | 0.1822(19) | 0.7500 |
| O5 | 0.0943(17) | 0.1505(7) | 0.9248(13) |
| O6 | 0.0000 | 0.1682(13) | 0.806(3) |
| O7 | 0.091 (2) | 0.25000 | 0.8879(19) |
| O8 | 0.198(2) | 0.0734(8) | 0.4270(15) |
| O9 | 0.1883(14) | 0.9599(6) | 0.382(2) |
| O10 | 0.1240(11) | 0.0165(13) | 0.2639(16) |
| O11 | 0.25000 | 0.0422(13) | 0.25000 |
| O12 | 0.0938(16) | 0.0759(7) | 0.0718(12) |
| O13 | 0.0822(14) | 0.9594(6) | 0.122(3) |
| O14 | 0.00000 | 0.0360(17) | 0.170(4) |
| O15 | 0.3035(4) | 0.1032(8) | 0.538(2) |

## Claims

**1.** A micro-porous crystalline material that is isostructural with the mineral Boggsite, **characterized in that** it has a chemical composition:
x X₂O₃: y YO₂: z ZO₂
where:
- X is a trivalent element selected from Al, B, Fe, In, Ga, Cr, or mixtures thereof;
- Y is a tetravalent element selected from Ti, Sn, Zr, V or mixtures thereof;
- Z is a tetravalent element selected from Si, Ge or mixtures thereof;
- the value of (y+z)/x is comprised between 9 and infinity;
- the value of z/y is comprised between 10 and infinity;
and **in that** it has a X-ray pattern represented in table 3.

**2.** A micro-porous crystalline material that is isostructural with the mineral Boggsite according to claim 1, wherein
- Y is selected from Ti, Sn, Zr, or mixtures thereof;
- the value of (y+z)/x is comprised between 20 and infinity;
- the value of z/y is comprised between 15 and infinity.

**3.** A micro-porous crystalline material that is isostructural with the mineral Boggsite according to any of claims 1 and 2, wherein Z is Si.

**4.** A micro-porous crystalline material that is isostructural with the mineral Boggsite according to any of claims 1 to 3, wherein x is equal to zero and has a chemical composition:
y YO₂ : z ZO₂

**5.** A micro-porous crystalline material that is isostructural with the mineral Boggsite according to any of claims 1 to 3, wherein y is equal to zero and has a chemical composition:
x X₂O₃: z ZO₂
where:
- the value of z/x is comprised between 9 and infinity.

**6.** A micro-porous crystalline material that is isostructural with the mineral Boggsite according to claim 5, wherein the value of z/x is comprised between 20 and infinity.

**7.** A micro-porous crystalline material that is isostructural with the mineral Boggsite according to any of claims 1 to 3, wherein it has a chemical composition:
t P₂O₅: x X₂O₃: y YO₂: z ZO₂
where:
- the value of t/(x+y+z) may be comprised between 1 and 0;
and has a X-ray pattern represented in table 2.

**8.** A micro-porous crystalline material that is isostructural with the mineral Boggsite according to claim 7, wherein it has a chemical composition:
t P₂O₅: y YO₂: z ZO₂
where:
- t/(y+z) may be comprised between 1 and 0.

**9.** A micro-porous crystalline material that is isostructural with the mineral Boggsite according to one of claims 6 and 7, wherein it has a chemical composition:
t P₂O₅: X X₂O₃: Z ZO₂
where:
- the value of z/x is comprised between 9 and infinity;
- t/(x+z) may be comprised between 1 and 0.

**10.** A micro-porous crystalline material that is isostructural with the mineral Boggsite according to claim 9, wherein the value of z/x is comprised between 20 and infinity.

**11.** A micro-porous crystalline material that is isostructural with the mineral Boggsite according to one of claims 1 to 3, wherein it has a chemical composition:
n R : x X₂O₃: z ZO₂: y YO₂
where:
- R is a structure director agent;
- the value of n/(x+y+z) is comprised between 1 and 0.001;
and it has a X-ray pattern represented in table 1.

**12.** A micro-porous crystalline material that is isostructural with the mineral Boggsite according to claim 11, wherein the structure director agent R contains P.

**13.** A micro-porous crystalline material that is isostructural with the mineral Boggsite according to claim 12, wherein R contains P-N bonds.

**14.** A micro-porous crystalline material that is isostructural with the mineral Boggsite according to claim 13, wherein R is selected from tert-Butyl-imino-tris(dimethylamino)-phosphorane and its protonated derivative.

**15.** A micro-porous crystalline material that is isostructural with the mineral Boggsite according to any of claims 11 to 14, wherein it has the following chemical composition:
n R : y YO₂: z ZO₂
where:
- the value of n/(y+z) is comprised between 1 and 0.001.

**16.** A micro-porous crystalline material that is isostructural with the mineral Boggsite according to any of claims 11 to 14, wherein it has the following chemical composition:
n R : x X₂O₃ : z ZO₂
where:
- the value of z/x is comprised between 9 and infinity;
- the value of n/(x+z) is comprised between 1 and 0.001.

**17.** A micro-porous crystalline material that is isostructural with the mineral Boggsite according to claim 16, wherein the value of z/x is comprised between 20 and infinity.

**18.** A micro-porous crystalline material that is isostructural with the mineral Boggsite according to any of the previous claims, wherein it has atoms in tetrahedral coordination linked through bridge oxygen atoms that connect contiguous atoms in tetrahedral coordination, containing 96 atoms in tetrahedral coordination in its cell unit, called T1, T3, T4 up to T96, which are located in the crystallographic positions with Cartesian atomic coordinates a, b and c that are shown in Table 5.

**19.** A method for the preparation of the material described according to any of claims 1 to 18, **characterized in that** it comprises at least the following steps:
a) preparation of a mixture that contains H₂O, an oxide or other source of the tetravalent material Z and a structure director agent (R), a source of the trivalent element X, an oxide or other source of the tetravalent material Y, where the synthesis mixture has a molar composition of oxides in the following ranges:
| | |
|---|---|
| (YO₂+ZO₂)/X₂O₃ | higher than 2 |
| H₂O/(YO₂+ZO₂) | 1-50 |
| R/(YO₂+ZO₂) | 0.05-3.0 |
| OH⁻/(YO₂+ZO₂) | 0.05-3.0 |
| ZO₂/YO₂ | higher than 5 |
| SiO₂/GeO₂ | higher than 2 |
b) maintain the mixture at a temperature between 80 and 200° C until the crystals of the material are formed;
c) recovery of the crystalline material.

**20.** Method for obtaining a material according to claim 19, wherein Z is Si.

**21.** Method for obtaining a material according to any of claims 19 and 20, wherein the structure director agent R is a compound that contains P.

**22.** Method for obtaining a material according to claim 21, wherein R contains P-N bonds.

**23.** Method for obtaining a material according to claim 22, wherein R is selected from tert-Butyl-imino-tris(dimethylamino)-phosphorane and its protonated cationic derivative.

**24.** Method for obtaining a material according to any of claims 19 to 23, wherein it comprises, in addition, the calcination of the crystalline material obtained.

**25.** Method for obtaining a material according to claim 24, wherein the calcination is carried out at a temperature between 200 and 1000° C.

**26.** Method for obtaining a material according to any of claims 19 and 25, wherein it comprises, in addition, at least one washing process of the calcined material.

**27.** Method for obtaining a material according to claim 26, wherein said washing process or processes comprise at least the following stage:
a) suspension of the material in a solution of a compound selected from an acid, a base, an ammonium salt, a sodium salt, a salt of any alkali metal, a salt of any alkaline-earth metal or mixtures thereof.

**28.** Method for obtaining a material according to claim 27, wherein said solution is selected from an aqueous, alcoholic or organic solution or mixture thereof.

**29.** Method for obtaining a material according to any of claims 26 to 28, wherein said washing is carried out at a temperature between 0 and 200° C.

**30.** Method for obtaining a material according to any of claims 19 to 29, wherein it comprises, in addition, one or several post-synthesis processes.

**31.** Method for obtaining a material according to claim 30, wherein said post-synthesis treatment comprises at least:
a) suspension in a solution that contains at least one trivalent element X selected from Al, Ga, B, Cr, Fe, In or mixtures thereof;
b) recovery of the solid by filtration, centrifugation or any technique for separating solids from liquids;
c) activation of the material by calcination at temperatures higher than 200° C.

**32.** Method for obtaining a material according to claim 31, wherein the solution is selected from an aqueous, alcoholic or organic solution or mixture thereof.

**33.** Method for obtaining a material according to any of the claims 31 and 32, wherein the post-synthesis treatment is carried out at a temperature between 0 and 200° C.

**34.** Use of a material described according to claims 1 to 18, and obtained according to the obtaining method described in claims 19 to 33, to convert feeds formed by organic compounds into higher added value products.

**36.** Use of a material described according to claims 1 to 18, and obtained according to the obtaining method described in claims 19 to 33, in processes of catalytic cracking of hydrocarbons.

**37.** Use of a material described according to claims 1 to 18, and obtained according to the obtaining method described in claims 19 to 33, in processes of alkylation of aromatic compounds with alcohols or olefins.
